# EUROPÄISCHE PATENTSCHRIFT

(11) **EP 2 095 508 B1**
(45) Veröffentlichungstag und Bekanntmachung des Hinweises auf die Patenterteilung: **29.05.2013**
(21) Anmeldenummer: 07856121.4
(22) Anmeldetag: 14.12.2007
(51) Int. Cl.: H02M 3/156

(54) **STEUEREINHEIT UND VERFAHREN ZUR PULSWEITENMODULIERTEN ANSTEUERUNG**
CONTROL UNIT AND METHOD FOR PULSE WIDTH MODULATED CONTROL
UNITÉ DE COMMANDE ET PROCÉDÉ D'EXCITATION À MODULATION D'IMPULSIONS EN LARGEUR

(30) Priorität: 22.12.2006 DE 102006062267
(43) Veröffentlichungstag der Anmeldung: 02.09.2009
(73) Patentinhaber: Conti Temic Microelectronic GmbH, 90411 Nürnberg (DE)
(72) Erfinder: JOOS, Uli, 88149 Nonnenhorn (DE); MICHAEL, Thomas, 85101 Lenting (DE); SCHNELL, Josef, 88142 Wasserburg (DE); RÖSSLER, Thomas, 85122 Hofstetten (DE)
(86) Internationale Anmeldenummer: PCT/DE2007/002272
(87) Internationale Veröffentlichungsnummer: WO 2008/077381

(56) Entgegenhaltungen:
- EP-A- 0 462 547
- WO-A-2005/056342
- DE-A1- 4 006 124
- DE-A1- 4 440 064
- US-A1- 2004 183 469
- US-B1- 6 770 983
- US-B1- 6 771 162

## Beschreibung

Die vorliegende Erfindung betrifft Steuereinheit zur Ansteuerung von einer Vielzahl von elektrischen Lasten mit einer Vielzahl von Eingangssignalen, wobei die elektrischen Lasten mittels pulsweitenmodulierter Signale angesteuert werden und die Eingangssignale pulsweitenmodulierte (PWM) Signale sind. Ferner betrifft die Erfindung Verfahren, mit dem die erfindungsgemäße Steuereinheit eine Vielzahl von elektrischen Lasten mit einer Vielzahl von Eingangssignalen ansteuert.

Die Ansteuerung von elektrischen Lasten wie Lampen, Heizwendeln, Schrittmotoren erfolgt oft mithilfe vom Pulsweitenmodulationsverfahren (PWM-Verfahren). Dabei kann die an die Last abgegebene Leistung mittels Pulsweitenmodulation vom in die Last einfließenden Strom geregelt bzw. gesteuert werden.

Ein wesentlicher Vorteil von PWM-Ansteuerung ist, dass die Verlustleistungen in der Ansteuerungselektronik durch den Schaltbetrieb vom PWM-Verfahren klein gehalten werden können. Daher wird das PWM-Verfahren häufig im Kraftfahrzeug zur Ansteuerung von elektronischen Lastkomponenten wie Lampen verwendet.

Die PWM-Signale, mit denen beispielsweise die Stromzufuhr in die Last ein-/ausgeschaltet wird, werden in Kraftfahrzeug-Steuergeräten normalerweise über in den Mikrokontroller integrierte Timer-Module erzeugt, wobei die Pulse aller PWM-Signale zum selben Zeitpunkt eingeschaltet bzw. auf logisch High gesetzt und je nach PWM-Signal-Tastverhältnis (Duty-Cycle) zu verschiedenen Zeitpunkten ausgeschaltet bzw. auf logisch Low gesetzt werden, vgl. beispielsweise DE 40 06 124 A1.

Dies führt zu einem Problem, welches auch ein Nachteil des PWM-Verfahrens ist, dass beim Einschalten der Pulse sehr hohe Schaltspitzen bei PWM-Signalen entstehen können. Nach dem Stand der Technik sind verschiedenen Verfahren zur Reduzierung dieser Schaltspitzen mit unterschiedlichen Ausführungsmöglichkeiten dargestellt.

Dabei werden vor allem die Einschaltzeitpunkte innerhalb einer Taktperiode so verteilt, dass der Wechselanteil und damit die Dämpfung minimal sind und zugleich die Grundwelle des resultierenden Eingangsstromes möglichst hoch und damit die benötigte Grenzfrequenz bzw. Dämpfung möglichst hoch ist. Dies kann durch Zuordnung der Einschaltzeitpunkte zu festen Phasenbeziehungen erfolgen.

Allerdings, falls eine Vielzahl von Regelungsaufgaben gleichzeitig durchgeführt wird, das heißt, dass eine Vielzahl von elektrischen Lasten von entsprechender Anzahl von PWM-Signalen gleichzeitig geregelt bzw. gesteuert wird, steigt der Aufwand in der Kontrollelektronik stark an bzw. wird der verfügbare Rechenaufwand für jeden einzelnen Eingangskanal reduziert.

Aus der EP 0 462 547 A ist eine Schaltungsanordnung zur Erzeugung einer sinusförmigen Netzwechselspannung aus einer Gleichspannung bekannt. Dabei wird die Gleichspannung in eine Rechteckspannung mit Spannungsimpulsen, deren Länge entsprechend der Änderung der zu erzeugenden sinusförmigen Netzwechselspannung gesteuert sind, umgeformt.

Aus der US 2004/183469 A1 und der DE 40 06 124 A1 ist jeweils eine Schaltung bzw. Schaltungsanordnung bekannt, in der mehrere Lastelemente mit einem einzigen PWM Generator betrieben werden.

Die US 6 771 162 B1 beschreibt Schaltungen, die zur programmierbaren Verbindung mehrerer Lastelemente mit einer Mehrzahl von Eingängen geeignet sind.

Die Aufgabe der vorliegenden Erfindung liegt darin, eine Steuereinheit der eingangs genannten Art und ein entsprechendes Verfahren anzugeben, welche es ermöglichen, mit einem geringeren Rechenaufwand und Aufwand an Kontrollelektronik eine Vielzahl von elektrischen Lasten zeitgleich mit einer möglichst geringeren Anzahl von PWM-Signalen anzusteuern.

Diese Aufgabe ist erfindungsgemäß gelöst durch eine Steuereinheit mit den Merkmalen des Anspruchs 1 bzw. durch ein Verfahren mit den Merkmalen des Anspruchs 4. Vorteilhafte Ausgestaltungen der Erfindung sind Gegenstand der Unteransprüche.

Kerngedanke der Erfindung ist, der Steuereinheit steuerbare Schaltmittel anzuordnen und ein entsprechendes Verfahren anzuzeigen, wobei mithilfe dieser Schaltmittel jede der anzusteuernden Last mit jeweils einem der mehreren unterschiedlichen PWM-Eingängen zugeschaltet werden kann. Dabei soll das Zuschalten von jeder einzelnen Last mit einem der mehreren PWM-Eingängen unabhängig von allen anderen Lasten separat durchgeführt werden können. Dabei sind Mittel angepasst zum Bereitstellen mehrerer PWM-Signale, die unterschiedliche Tastverhältnisse aufweisen, mit jeweils einem der PWM-Eingänge der steuerbaren Schaltmittel verbunden. Ferner soll es auch möglich sein, mehrere Lasten mit einem gemeinsamen PWM-Signal synchron anzusteuern.

Die Steuereinheit mit steuerbaren Schaltmitteln kann vorzugsweise aber nicht ausschließlich über ein digitales Interface z.B. SPI Bus angesteuert werden.

Eine derartige erfindungsgemäße Steuereinheit bzw. ein derartiges erfindungsgemäßes Verfahren findet Anwendungen insbesondere aber nicht ausschließlich bei pulsweitenmodulierter Ansteuerung von Elektrolampen, Elektromotoren, Heizwendeln eines Kraftfahrzeugs.

Im Folgenden wird die Erfindung anhand der Ausführungsbeispiele und Figuren sowie Tabellen näher erläutert. In den Figuren werden nur die für die Beschreibung der erfindungsgemäßen Steuereinheit bzw. des erfindungsgemäßen Verfahren wesentliche Komponenten angezeigt. Besonders sind die erfindungsgemäßen steuerbaren Schaltelemente nicht in den Figuren angezeichnet. Die erfindungsgemäße Steuereinheit bzw. die elektronische Schaltungsanordnung zum Durchführen des erfindungsgemäßen Verfahrens kann in der Regel je nach der Ausführung viel komplexer sein.

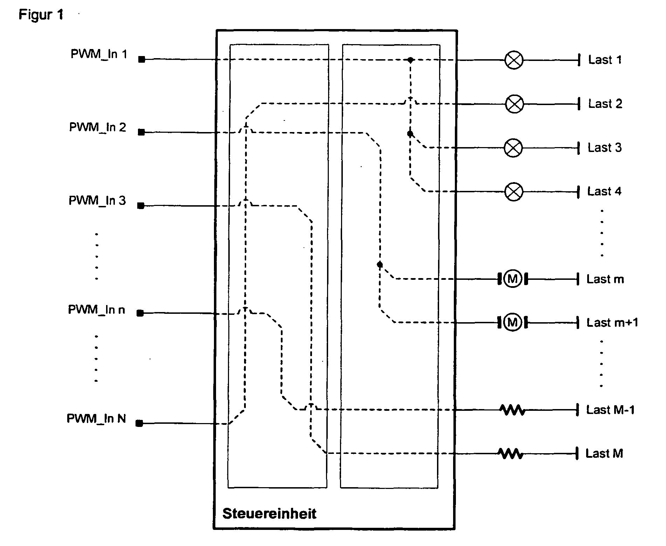

Figuren 1 bis 3 zeigen eines der Ausführungsbeispiele schematisch. Sie zeigen erfindungsgemäße Steuereinheit zur Ansteuerung von einer Vielzahl von Lasten, wobei die Lasten von einer ebenfalls Vielzahl von verschiedenen PWM-Eingangssignalen angesteuert werden. "Verschiedene PWM-Eingangssignale" bedeutet, dass die PWM-Eingangssignale unterschiedliche Phasenlage bzw. Tastverhältnisse ausweisen.

In diesem Ausführungsbeispiel werden beispielsweise **M** elektrische Lasten von N PWM-Eingangssignalen angesteuert, wobei vorteilhafterweise **M** > **N: M** größer als **N** ist. Aber auch **M » N: M** viel größer als **N** ist denkbar. Dabei sind **M und N** beliebige natürliche Zahl.

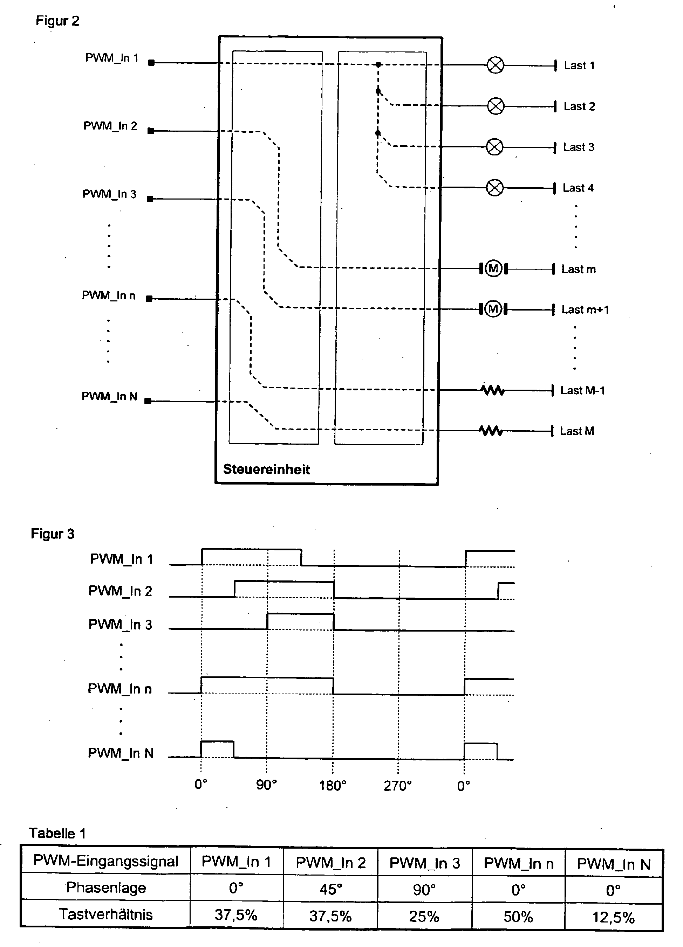

Dabei weist vorzugsweise jedes einzelne von **N PWM**-Eingangssignalen, wie in der Figur 3 bzw. in der Tabelle 1 zu sehen ist, mehr oder weniger unterschiedliche Phasenlage bzw. Tastverhältnisse auf. In der Tabelle 1 sind Phasenlage- bzw. Tastverhältniswerte aller in der Figur 1 angezeigten PWM-Eingangssignale **PWM_In 1**, ..., **PWM_In N** dargestellt. Demnach weist das erste PWM-Eingangssignal **PWM_In 1** eine Phasenlage von 0° und ein Tastverhältnis von 37,5% und das dritte PWM-Eingangssignal **PWM_In 3** eine Phasenlage von 90° und ein Tastverhältnis von 25%.

**Diese** unterschiedlichen PWM-Eingangssignale werden dann jeweiliger Last mithilfe von erfindungsgemäßer Steuereinheit zugeordnet eingeschaltet. Dabei werden diese Signale vorzugsweise mithilfe von in der Steuereinheit integrierten steuerbaren Schaltmitteln je nach Bedarf ausgewählt und jeweiliger Last ebenfalls mithilfe von diesen steuerbaren Schaltmitteln zugeschaltet. Dabei kann ein PWM-Signal zu mehreren Lasten zugeschaltet werden.

Wie die Figur 1 zeigt, ist der erste PWM-Eingang zu einem Betriebszeitpunkt **t1** beispielsweise den Lasten **Last 1, Last 3** und **Last 4** zugeschaltet. Somit werden die Lasten **Last 1, Last 3** und **Last 4** von einem gemeinsamen PWM-Signal **PWM_In 1** synchron angesteuert, während das PWM-Signal **PWM_In 2** von dem zweiten Eingang die Lasten **Last** m und Last m+1 synchron ansteuert.

**Zu** einem anderen Betriebszeitpunkt t2 steuert der PWM-Eingang bzw. das PWM-Signal **PWM_In 1,** wie in der Figur 2 gezeigt ist, neben den Lasten **Last 1,** Last **3** und Last **4** auch die **Last** 2 an. Der PWM-Eingang bzw. das PWM-Signal **PWM_In N,** der zu dem Betriebszeitpunkt **t1** die **Last 2** angesteuert hat, steuert nun **Last M.**

Das Zuschalten von PWM-Eingängen mit den anzusteuernden Lasten wird erfindungsgemäß von den in der Steuereinheit integrierten steuerbaren Schaltelementen beispielsweise mithilfe von Multiplex-/ Demultiplex-Verfahren durchgeführt.

Die PWM-Eingangssignale können beispielsweise von einem gegenüber der erfindungsgemäßen Steuereinheit getrennt ausgeführten separaten PWM-Signal-Generator erzeugt und geregelt werden, können aber auch von einer in der erfindungsgemäßen Steuereinheit integrierten PWM-Singal-Generatoreinheit erzeugt und geregelt werden.

Die Ansteuerung von diesen erfindungsgemäßen steuerbaren Schaltmitteln kann mittels eines digitalen Interface beispielsweise SPI-Bus erfolgen.

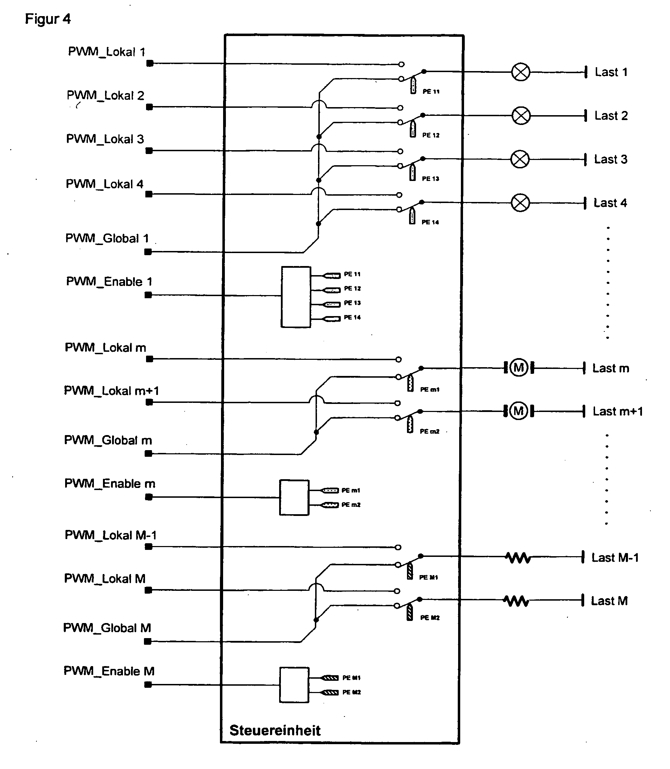

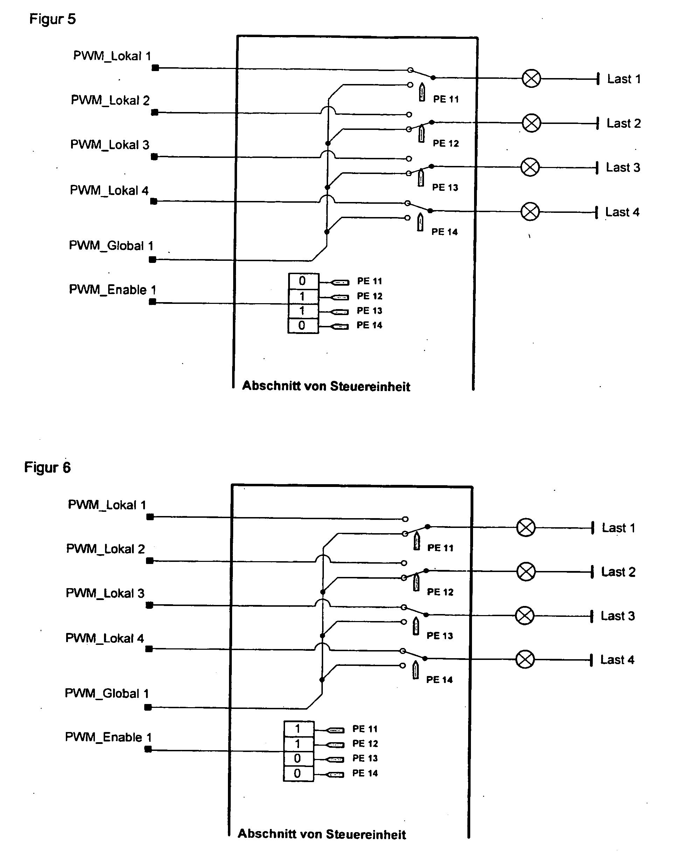

Die Figuren 4 bis 6 zeigen ein weiteres Ausführungsbeispiel, wobei werden in den Figuren 5 und 6 nur einen Abschnitt von Figur 5 zur Beschreibung des erfindungsgemäßen Ausführungsbeispiels angezeigt. Dieses Ausführungsbeispiel beschreibt eine Steuereinheit und ein entsprechendes Verfahren, mithilfe von denen eine Vielzahl von Lasten sowohl individuell von einem jeder Last individuell zugestimmten PWM-Eingang als auch von einem gemeinsamen PWM-Eingang unter Beibehaltung der jeweiligen Phasenlage angesteuert wird.

In diesem Ausführungsbeispiel wird vorzugsweise jeder Last ein individueller PWM-Eingang vorgesehen. Hinzu wird für Lasten, die beim Betrieb je nach Bedarf sowohl mit verschiedener Phasenlage bzw. verschiedenem Tastverhältnis als auch mit gleicher Phasenlage bzw. gleichem Tastverhältnis angesteuert werden, ein gemeinsamer PWM-Eingang vorgesehen.

Wie die Figur 4 zeigt, jeder Last ist ein individueller PWM-Eingang, im Folgenden wird Lokaler PWM-Eingang genannt, schaltbar zugeordnet. Neben dem lokalen PWM-Eingang ist jede Last außerdem mit einem zweiten, lastspezifischen gemeinsamen PWM-Eingang zuschaltbar. Dieser lastspezifische gemeinsam zu einer Vielzahl von Lasten zuschaltbare PWM-Eingang wird im Folgenden globaler PWM-Eingang genannt. Das Wort "lastspezifisch" bedeutet dabei, dass die Lasten, die von einem gemeinsamen PWM-Eingang synchron angesteuert werden, verfügen gemeinsamen physikalischen funktionellen Eigenschaften wie z. B. Lampen von rechtseitigen Kraftfahrzeugblinklichten.

Für jede Last ist ein steuerbares Schaltelement in der erfindungsgemäßen Steuereinheit angeordnet. Jedes Schaltelement schaltet die Last zwischen dem lokalen und globalen PWM-Eingang je nach Bedarf hin und her.

Somit kann jede Last entweder von dem lokalen oder von dem globalen PWM-Eingang angesteuert werden. Die Umschaltung zwischen dem lokalen und dem globalen Eingang erfolgt durch eine jedem globalen Eingang vorgesehenen Umschaltsignal **PWM_Enable.**

Jedes PWM-Enable-Signal zu jedem globalen PWM-Eingangssignal verfügt eine Anzahl von Bits wie die Anzahl von vom jeweiligen globalen Eingang maximal gleichzeitig **anzusteuernden** Lasten.

Wie in der Figur 4 zu sehen ist, der globale PWM-Eingang **PWM_Global 1** steuert maximal vier Lasten **Last 1** bis **Last 4** gleichzeitig. Jede dieser vier Lasten sollen unabhängig von anderen 3 Lasten einzeln mit dem globalen PWM-Eingang **PWM_Global 1 zu-** bzw. abgeschaltet werden.

Dies wird durch das Umschaltsignal **PWM_Enable,** in diesem Fall ein 4 Bits Signal **PWM_Enable 1,** ermöglicht. Das Umschaltsignal **PWM_Enable 1** setzt den globalen PWM-Eingang **PWM_Global** 1 zu jeweiliger Last.

Wie in der Figur 5 gezeigt ist, wird das Umschaltsignal **PWM_Enable 1** im Betriebszeitpunkt t1 beispielsweise von einem binären Signalwert 0110 gesetzt. Der globale PWM-Eingang **PWM_Global 1** ist somit zu den Lasten **Last 2** und **Last 3** zugeschaltet. Die Lasten **Last 1** und **Last 4** werden vom jeweiligen lokalen PWM-Eingang **PWM_lokal 1** bzw. **PWM_lokal 4** angesteuert.

Zu einem **Betriebszeitpunkt t2** wird beispielsweise, wie in der Figur 6 gezeigt ist, das Umschaltsignal **PWM_Enable 1** von einem binären Signalwert **1100** gesetzt. Der globale PWM-Eingang **PWM_Global 1** wird somit zu den Lasten **Last 1** und **Last 2** zugeschaltet. Die Lasten **Last 3** und **Last 4** werden dann dem lokalen PWM-Eingang **PWM_lokal 3** bzw. **PWM_lokal 4** zugeschaltet.

Durch die Einführung von einem oder auch mehreren globalen PWM-Eingängen kann eine Vielzahl von Lasten, die betriebsbedingt von PWM-Signalen mit gleicher Phasenlage bzw. gleichem Tastverhältnis angesteuert werden müssen oder können wie z. B. die Fahrzeugfernlichtlampen, von einem einzigen globalen PWM-Eingang angesteuert werden. Dadurch kann die Anzahl der aktiven PWM-Signalen reduziert werden und somit auch die EMV-Abstrahlung (EMV: Elektromagnetische Verträglichkeit) durch die überflüssigen PWM-Signalen.

Eine weiterführende Ausführung der Erfindung ist, die beiden vorhin beschriebenen Ausführungsbeispiele zu kombinieren. Dadurch kann eine flexiblere Ansteuerung von einer Vielzahl von elektrischen Lasten mit einem relativ geringeren Aufwand und einer geringeren EMV-Störung erzielt werden.

Die oben angezeigten Ausführungsbeispielen verdeutlichen den Vorteil der erfindungsgemäßen Steuereinheit bzw. des erfindungsgemäßen Verfahren zur pulsweitenmodulierten Ansteuerung einer Vielzahl von Lasten, dass diese Lasten flexibel von einem gemeinsamen PWM-Eingang synchron und phasenoptimiert angesteuert werden können.

Zudem wird durch die Ansteuerung von Vielzahl von Lasten mit einem einzigen PWM-Signal die Anzahl der aktiven PWM-Signale reduziert und somit auch der erforderliche Rechenaufwand.

Durch eine Anordnung gemäß oben beschriebenem Verfahren wird eine größtmögliche Flexibilität der Ausgänge bei gleichzeitig minimalem Steueraufwand und optimaler PWM Verteilung erreicht.

Die folgende Tabelle 2 zeigt beispielhaft ein Bit Schema der Programmierung des Ausführungsbeispiels gemäß den Figuren 4 bis 6.

Die Register 1 bis 4: **CH1** control bis **CH4 control** dienen zur individuellen Programmierung von vier lokalen PWM-Eingängen **PWM_lokal 1** bis **PWM_lokal 4** nach PWM-Tastverhältnisse und Phasenlage, wobei beispielsweise 8 Bits: **D0** bis **D7** für die Einstellung von PWM-Tastverhältnisse und 2 Bits: **D8** bis **D9** für die die Einstellung von Phasenlage vorgesehen sind.

Mit dem Register 5: global PWM enable kann die Steuereinheit die Lasten Last 1 bis **Last 4** zwischen den lokalen Eingängen: **PWM_lokal 1 bis 4** und dem globalen Eingang: **PWM_Global 1** hin und herschalten. Der Register 5: global **PWM enable** verfügt 4 Bits, wobei jedes Bit jeweils einer Last zugeordnet ist.

Register 6 dient vorzugsweise zur Einstellung des PWM Wertes vom globalen Eingang, nämlich das PWM-Tastverhältnis und die Phasenlage von **PWM_Global.** Die Phasenlage beim Zuschalten des globalen Eingangs wird vorzugsweise von lokalen Eingängen direkt übernommen und so muss der Multiphasenbetrieb nicht verlassen werden.

Dieses Verfahren ist hilfreich bei der Regelung von Lichtquellen aus einer variablen Gleichspannungsquelle (z.B. Glühlampen oder LED's mit Vorwiderständen im KFZ Bordnetz). Dabei werden die Anzahl der Programmierschritte und so die Belastung der Steuereinheit erheblich reduziert.

**Tabelle 2**

| Register | | Programmierbare Datenbits | | | | | | | | | |
|---|---|---|---|---|---|---|---|---|---|---|---|
| | | D9 | D8 | D7 | D6 | D5 | D4 | D3 | D2 | D1 | D0 |
| 1 | CH1 control | Phase 1 (Kanal 1) | Phase 0 (Kanal 1) | PWM 7 (Kanal 1) | PWM 6 (Kanal 1) | PWM 5 (Kanal 1) | PWM 4 (Kanal 1) | PWM 3 (Kanal 1) | PWM 2 (Kanal 1) | PWM 1 (Kanal 1) | PWM 0 (Kanal 1) |
| 2 | CH2 control | Phase 2 (Kanal 2) | Phase 0 (Kanal 2) | PWM 7 (Kanal 2) | PWM 6 (Kanal 2) | PWM 5 (Kanal 2) | PWM 4 (Kanal 2) | PWM 3 (Kanal 2) | PWM 2 (Kanal 2) | PWM 1 (Kanal 2) | PWM 0 (Kanal 2) |
| 3 | CH3 control | Phase 2 (Kanal 3) | Phase 0 (Kanal 3) | PWM 7 (Kanal 3) | PWM 6 (Kanal 3) | PWM 5 (Kanal 3) | PWM 4 (Kanal 3) | PWM 3 (Kanal 3) | PWM 2 (Kanal 3) | PWM 1 (Kanal 3) | PWM 0 (Kanal 3) |
| 4 | CH4 control | Phase 2 (Kanal 4) | Phase 0 (Kanal 4) | PWM 7 (Kanal 4) | PWM 6 (Kanal 4) | PWM 5 (Kanal 4) | PWM 4 (Kanal 4) | PWM 3 (Kanal 4) | PWM 2 (Kanal 4) | PWM 1 (Kanal 4) | PWM 0 (Kanal 4) |
| 5 | global PWM enable | x | x | x | x | x | x | global PWM enable Kanal 4 | global PWM enable Kanal 3 | global PWM enable Kanal 2 | globale PWM enable Kanal 1 |
| 6 | global PWM control | x | x | PWM 7 (Globale Kanal) | PWM 6 (Globale Kanal) | PWM 5 (Globale Kanal) | PWM 4 (Globale Kanal) | PWM 3 (Globale Kanal) | PWM 2 Globale Kanal) | PWM 1 (Globale Kanal) | PWM 0 (Globale Kanal) |

## Patentansprüche

1. Steuereinheit zum Steuern von einer Mehrzahl von elektrischen Lasten,
- wobei die Lasten mittels pulsweitenmodulierter Signale angesteuert werden und,
- wobei die Steuereinheit eine Mehrzahl von PWM(Pulsweitenmodulation)-Eingängen mit jeweils einem PWM-Signal aufweist,
- und steuerbare Schaltmittel vorgesehen sind, wobei mithilfe dieser Schaltmittel zumindest eine Last mit jeweils einem aus zumindest zwei unterschiedlichen PWM-Eingängen zuschaltbar ist,
**dadurch gekennzeichnet, dass**
- Mittel angepasst zum Bereitstellen mehrerer PWM-Signale, die unterschiedliche Tastverhältnisse aufweisen, mit jeweils einem der PWM-Eingänge der steuerbaren Schaltmittel verbunden sind.

2. Steuereinheit nach dem Anspruch 1, **dadurch gekennzeichnet, dass** für zumindest eine Gruppe von Lasten, vorzugsweise jede Last, ein individueller PWM-Eingang vorgesehen ist und zusätzlich ein globaler PWM-Eingang vorgesehen ist, wobei durch die Schaltmittel jede Last der Gruppe von Lasten entweder mit seinem individuellen PWM-Eingang oder mit dem globalen PWM-Eingang verbunden ist.

3. Steuereinheit nach einem der vorangehenden Ansprüche, **dadurch gekennzeichnet, dass** zumindest zwei Lasten von einem PWM-Eingang synchron ansteuerbar sind, wobei die Lasten mit verschiedenen Phasenlagen angesteuert werden.

4. Steuereinheit nach einem der vorangehenden Ansprüche, **dadurch gekennzeichnet, dass** das Zuschalten mit einem aus zumindest zwei PWM-Eingängen für jede Last unabhängig von allen anderen Lasten separat durchführbar ist.

5. Verfahren zum Ansteuern von einer Vielzahl von elektrischen Lasten,
- wobei die Lasten mittels pulsweitenmodulierter Signale angesteuert werden und,
- wobei die Lasten von einer Vielzahl von PWM-Eingängen mit jeweils einem PWM-Signal angesteuert werden,
- zumindest eine Last mit jeweils einem aus zumindest zwei unterschiedlichen PWM-Eingängen zugeschaltet wird
**dadurch gekennzeichnet, dass**
mehrere PWM-Signale, die unterschiedliche Tastverhältnisse aufweisen durch Mittel bereitgestellt werden, wobei die Mittel mit jeweils einem der PWM-Eingänge der steuerbaren Schaltmittel verbunden sind.

6. Verfahren nach dem Anspruch 5, **dadurch gekennzeichnet, dass** zumindest zwei Lasten von einem PWM-Eingang synchron angesteuert werden.

7. Verfahren nach einem der Ansprüche 5 oder 6, **dadurch gekennzeichnet, dass** zumindest zwei Lasten von einem PWM-Eingang synchron mit verschiedenen Phasenlagen angesteuert werden.

8. Verfahren nach einem der Ansprüche 5 bis 7, **dadurch gekennzeichnet, dass** das Zuschalten mit einem aus zumindest zwei PWM-Eingängen für jede Last unabhängig von allen anderen Lasten separat durchgeführt wird.

9. Ansteuerung von elektrischen Lasten wie Lampen, Elektromotoren, Heizwendeln mit einer Steuereinheit nach zumindest einem der Ansprüche 1 bis 4 oder mit Verfahren nach zumindest einem der Ansprüche 5 bis 8.

10. Kraftfahrzeuge mit einer Steuereinheit nach zumindest einem der Ansprüche 1 bis 4 oder mit Verwendung von Verfahren nach zumindest einem der Ansprüche 5 bis 8.

## Claims

1. A control unit for controlling a plurality of electric loads,
● wherein the loads are driven by means of pulse-width-modulated signals, and
● wherein the control unit has a plurality of pulse-width modulation (PWM) inputs with one PWM signal each,
● and controllable switching means are provided, wherein at least one load can be connected, with the aid of said switching means, with one of at least two different PWM inputs each,
**characterized in that**
● means adapted to provide several PWM signals having different duty factors are connected with one of the PWM inputs of the controllable switching means each.

2. The control unit according to claim 1, **characterized in that** for at least one group of loads, preferably for each load, an individual PWM input is provided and a global PWM input is provided in addition, wherein each load of the group of loads is connected, with the aid of the switching means, either with its individual PWM input or with the global PWM input.

3. The control unit according to any one of the preceding claims, **characterized in that** at least two loads can be synchronously driven by one PWM input, wherein the loads are driven with different phase positions.

4. The control unit according to any one of the preceding claims, **characterized in that** the connection with one of at least two PWM inputs can be separately performed for each load, independently of all other loads.

5. A method for driving a plurality of electric loads,
● wherein the loads are driven by means of pulse-width-modulated signals, and
● wherein the loads are driven by a plurality of PWM inputs with one PWM signal each,
● at least one load is connected with one of at least two different PWM inputs each,
**characterized in that**
● several PWM signals having different duty factors are provided by means, wherein the means are connected with one of the PWM inputs of the controllable switching means each.

6. The method according to claim 5, **characterized in that** at least two loads are synchronously driven by one PWM input.

7. The method according to any one of claims 5 or 6, **characterized in that** at least two loads are synchronously driven by one PWM input with different phase positions.

8. The method according to any one of claims 5 to 7, **characterized in that** the connection with one of at least two PWM inputs is separately performed for each load, independently of all other loads.

9. Driving of electric loads, such as lamps, electric motors, heating spirals, by a control unit according to at least one of claims 1 to 4 or by methods according to at least one of claims 5 to 8.

10. Motor vehicles with a control unit according to at least one of claims 1 to 4 or with using methods according to at least one of claims 5 to 8.

## Revendications

1. Unité de commande pour la commande d'une pluralité de charges électriques,
- les charges étant pilotées au moyen de signaux modulés en durée d'impulsions et,
- l'unité de commande présentant une pluralité d'entrées PWM (à modulation de durée d'impulsions) avec respectivement un signal PWM,
- et des moyens de commutation contrôlables étant prévus, au moins une charge pouvant, à l'aide de ces moyens de commutation, être connectée à respectivement une entrée PWM parmi au moins deux entrées PWM différentes,
**caractérisée en ce que**
- des moyens adaptés à la fourniture de plusieurs signaux PWM qui présentent différents taux d'impulsions sont raccordés respectivement à une des entrées PWM des moyens de commutation contrôlables.

2. Unité de commande selon la revendication 1, **caractérisée en ce que**, pour au moins un groupe de charges, de préférence pour chaque charge, il est prévu une entrée PWM individuelle, et en plus il est prévu une entrée PWM globale, chaque charge du groupe de charges étant, par les moyens de commutation, raccordée soit à son entrée PWM individuelle, soit à l'entrée PWM globale.

3. Unité de commande selon une des revendications précédentes, **caractérisée en ce qu'**au moins deux charges peuvent être pilotées de façon synchrone par une entrée PWM.

4. Unité de commande selon une des revendications précédentes, **caractérisée en ce que** la connexion peut être effectuée séparément avec une entrée PWM parmi au moins deux entrées PWM pour chaque charge indépendamment de toutes les autres charges.

5. Procédé de pilotage d'une multiplicité de charges électriques,
- les charges étant pilotées au moyen de signaux modulés en durée d'impulsions, et
- les charges étant pilotées par une multiplicité d'entrées PWM avec respectivement un signal PWM,
- au moins une charge étant connectée à respectivement une entrée PWM parmi au moins deux entrées PWM différentes,
**caractérisé en ce que**
plusieurs signaux PWM qui présentent différents taux d'impulsions sont fournis par des moyens, les moyens étant raccordés à respectivement une des entrées PWM des moyens de commutation contrôlables.

6. Procédé selon la revendication 5, **caractérisé en ce qu'**au moins deux charges sont pilotées de façon synchrone par une entrée PWM.

7. Procédé selon une des revendications 5 ou 6, **caractérisé en ce qu'**au moins deux charges sont pilotées de façon synchrone par une entrée PWM avec différentes positions de phase.

8. Procédé selon une des revendications 5 à 7, **caractérisé en ce que** la connexion à une entrée PWM parmi au moins deux entrées PWM est effectuée séparément pour chaque charge indépendamment de toutes les autres charges.

9. Pilotage de charges électriques telles que des lampes, des moteurs électriques, des filaments de chauffage avec une unité de commande selon une des revendications 1 à 4 ou avec des procédés selon au moins une des revendications 5 à 8.

10. Véhicules avec une unité de commande selon au moins une des revendications 1 à 4 ou avec l'utilisation de procédés selon au moins une des revendications 5 à 8.
